(19) **Europäisches Patentamt / European Patent Office / Office européen des brevets**

(11) **EP 3 882 730 B1**

(12) **EUROPEAN PATENT SPECIFICATION**

(45) Date of publication and mention
of the grant of the patent:
**19.04.2023 Bulletin 2023/16**

(21) Application number: **19911692.2**

(22) Date of filing: **22.01.2019**

(51) International Patent Classification (IPC):
***G05D 1/02*** *(2020.01)*

(52) Cooperative Patent Classification (CPC):
**G05D 1/0016; G05D 1/0033; G05D 1/0246;**
G05D 2201/0211

(86) International application number:
**PCT/JP2019/001861**

(87) International publication number:
**WO 2020/152777 (30.07.2020 Gazette 2020/31)**

(54) **ACCOMPANYING MOBILE BODY**

BEGLEITENDER MOBILER KÖRPER

CORPS MOBILE D'ACCOMPAGNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.09.2021 Bulletin 2021/38**

(73) Proprietor: **HONDA MOTOR CO., LTD.**
**Minato-ku**
**Tokyo 107-8556 (JP)**

(72) Inventors:
• **KAWAI, Toru**
**Wako-shi, Saitama 351-0193 (JP)**
• **MUKAI, Hiroki**
**Wako-shi, Saitama 351-0193 (JP)**

• **TAKAHASHI, Hiroto**
**Wako-shi, Saitama 351-0193 (JP)**

(74) Representative: **Weickmann & Weickmann PartmbB**
**Postfach 860 820**
**81635 München (DE)**

(56) References cited:
**JP-A- H08 305 438**    **JP-A- 2004 299 025**
**JP-A- 2007 213 367**    **JP-A- 2007 229 814**
**JP-A- 2010 061 316**    **JP-A- 2014 211 704**
**US-A1- 2004 199 292**    **US-B1- 8 634 981**
**US-B1- 10 180 683**

EP 3 882 730 B1

# Description

[Technical Field]

The present invention relates to an accompanying mobile body.

[Background Art]

Conventionally, as an accompanying mobile body that moves while accompanying a user, for example, Patent Literature 1 describes a store robot including a function of traveling following a user in order to assist the user in purchasing products at a store such as a supermarket. The store robot described in Patent Literature 1 shoots the user using an image sensor, and calculates a distance of the user from the store robot. The store robot is caused to follow the user by driving and controlling wheels through a movement mechanism such that a distance between the store robot and the user is kept constant.

Further reference shall be made to documents US 10 180 683 B2 and US 8 634 981 B1, both of which disclose accompanying mobile bodies with a propelling unit, a movement state recognition section, a predicted location calculation section, an accompanying control section, and an accompanying condition change section.

[Citation List]

[Patent Literature]

[Patent Literature 1]
Japanese Patent Laid-Open No. 2006-155039

[Summary of Invention]

[Technical Problem]

The conventional accompanying mobile body accompanies a user while keeping a distance from the user constant. However, an appropriate sense of distance from an accompanying mobile body may differ for each user. It is considered that a user may desire to change a distance between the user and an accompanying mobile body and a direction of the accompanying mobile body relative to the user depending on a movement pattern of the user and a content of work to be performed by the accompanying mobile body. A change in such accompanying conditions is desirably swiftly reflected on a state of movement of the accompanying mobile body such that use of the accompanying mobile body by the user is not interrupted.

The present invention is made in light of such a background, and an object of the present invention is to provide an accompanying mobile body that can swiftly reflect a change in accompanying conditions by an instruction from a user on a state of movement.

[Solution to Problem]

As a configuration to achieve the above object, an accompanying mobile body isprovided that includes a propelling unit and accompanies a user, the accompanying mobile body including: a movement state recognition section that recognizes a state of movement of the user; a predicted location calculation section that calculates a predicted location of the user after a first predetermined time period based on the state of movement of the user; an accompanying control section that performs accompanying control to cause the accompanying mobile body to move by the propelling unit toward a target location of accompanying that is a location apart from the predicted location by a specified distance in a specified direction; and an accompanying condition change section that changes one or both of the specified direction and the specified distance in accordance with an instruction to change from the user.

The accompanying mobile body further includes a motion recognition section that recognizes a motion of the user, and the accompanying condition change section may be configured to recognize, when a first predetermined motion is recognized by the motion recognition section, the instruction to change corresponding to the first predetermined motion.

In the accompanying mobile body, the accompanying condition change section may be configured to accept, when a gesture of the user that is a swing of an arm from the specified direction to another direction is recognized as the first predetermined motion by the motion recognition section, an instruction to change the specified direction to the other direction as the instruction to change.

In the accompanying mobile body, the accompanying condition change section may be configured to accept, when a gesture of the user that is an indication of a number with fingers is recognized as the first predetermined motion by the motion recognition section, an instruction to change the specified distance in accordance with the number with fingers as the instruction to change.

In the accompanying mobile body, the accompanying condition change section is configured to switch, when a second predetermined motion is recognized by the motion recognition section, from an accompanying condition change prohibition mode in which acceptance of the instruction to change is prohibited to an accompanying condition change permission mode in which acceptance of the instruction to change is permitted.

In the accompanying mobile body, the accompanying condition change section may be configured to switch, when the motion recognition section recognizes that the user directs a line of sight toward a predetermined location for a second predetermined time period or longer as the second predetermined motion, from the accompanying condition change prohibition mode to the accompanying condition change permission mode.

The accompanying mobile body further includes a voice recognition section, and the accompanying condition change section may be configured to switch, when predetermined voice is recognized by the voice recognition section, from an accompanying condition change prohibition mode in which acceptance of the instruction to change is prohibited to an accompanying condition change permission mode in which acceptance of the instruction to change is permitted.

In the accompanying mobile body, the accompanying control section may be configured to execute, when the accompanying conditions are changed by the accompanying condition change section, a change-responsive movement to cause the accompanying mobile body to move to a location according to the changed accompanying conditions, and then cause the accompanying mobile body to move through the accompanying control in response to movement of the user.

The accompanying mobile body may further include a camera capable of changing a shooting direction, and the accompanying control section may be configured to cause, when the specified direction is changed by the accompanying condition change section to cause the accompanying mobile body to move through the change-responsive movement, the accompanying mobile body to move while turning the camera toward the user.

The accompanying mobile body may further include an obstacle detection section that detects an obstacle existing in a traveling direction of the accompanying mobile body, and the accompanying control section may be configured to perform processing for avoiding contact with the obstacle detected by the obstacle detection section.

[Advantageous Effect of Invention]

According to the accompanying mobile body, one or both of the specified direction and the specified distance when the accompanying mobile body is caused to accompany the user is or are changed in accordance with the instruction to change from the user by the accompanying condition change section. Through the accompanying control by the accompanying control section, the accompanying mobile body moves toward the target location of accompanying that is the location apart from the predicted location of the user after the predetermined time period calculated by the predicted location calculation section by the specified distance in the specified direction. Thus, when the specified direction or the specified distance as the accompanying condition of the accompanying mobile body is changed in response to the instruction from the user, the changed accompanying condition can be swiftly reflected on the state of movement of the accompanying mobile body.

[Brief Description of Drawings]

[Figure 1] Figure 1 is an illustrative diagram showing a usage form of a shopping cart that is an accompanying mobile body according to an embodiment.
[Figure 2] Figure 2 is a configuration diagram of the shopping cart.
[Figure 3] Figure 3 is a flowchart of operations of the shopping cart.
[Figure 4] Figure 4 is an illustrative diagram of an initial guide screen.
[Figure 5] Figure 5 is a flowchart of processing of creating a selected material list.
[Figure 6] Figure 6 is an illustrative diagram of a to-be-purchased material selection screen.
[Figure 7] Figure 7 is an illustrative diagram of a selected material list.
[Figure 8] Figure 8 is a flowchart of processing of retrieving a shopping route.
[Figure 9] Figure 9 is an illustrative diagram of display locations of selected materials.
[Figure 10] Figure 10 is a flowchart of processing of guiding along the shopping route.
[Figure 11] Figure 11 is an illustrative diagram of a guide screen for a route of purchase.
[Figure 12] Figure 12 is an illustrative diagram of a form of the shopping cart that accompanies in front of the user in a situation where the user moves in a straight line.
[Figure 13] Figure 13 is an illustrative diagram of a purchased article list.
[Figure 14] Figure 14 is an illustrative diagram of a form of the shopping cart that overtakes the user in a situation where the user abruptly turns.
[Figure 15] Figure 15 is an illustrative diagram of a form of shopping cart that moves around the user when the user turns round at one place.
[Figure 16] Figure 16 is a flowchart of processing of changing accompanying conditions.
[Figure 17] Figure 17 is an illustrative diagram of a form of changing a specified direction of the accompanying conditions through a gesture of swinging an arm.
[Figure 18] Figure 18 is an illustrative diagram of a form of changing a specified distance of the accompanying conditions through a gesture of indicating a number with fingers.
[Figure 19] Figure 19 is a flowchart of processing of requesting to settle purchased articles by card.

[Description of Embodiments]

[1. Usage form of shopping cart]

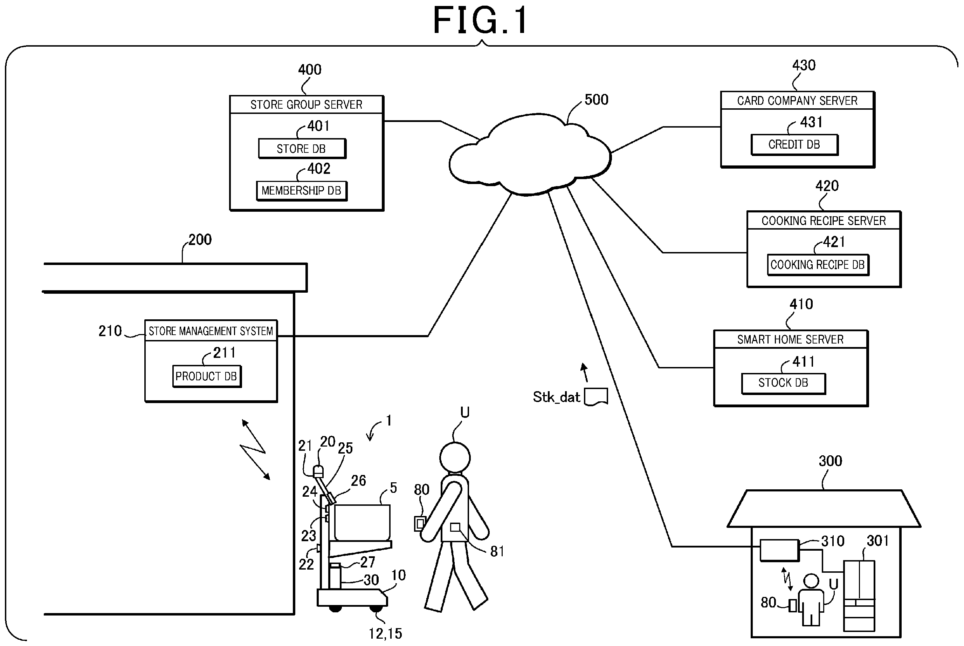

A usage form of an accompanying mobile body according to an embodiment will be described with reference to Figure 1. The accompanying mobile body according to the present embodiment is a shopping cart 1 and, in a store 200, accompanies a user U who is a shopper, moves in a self-propelled manner in the store 200, and assists the user U in shopping.

The shopping cart 1 includes a basket 5 in which a product is contained, a traveling unit 10, an omnidirectional camera 20, a LiDAR (Light Detection and Ranging) 21, a forward camera 22, a speaker 23, a microphone 24, a touch panel 25, a card reader 26, a communication unit 27, and a control unit 30.

Here, the omnidirectional camera 20, the LiDAR 21, and the forward camera 22 are provided to constantly observe a bearing and a distance of the user U relative to the shopping cart 1, and an obstacle existing in front of the shopping cart 1. As other configurations to perform such constant observation, for example, configurations (a) to (c) described below can also be adopted.

(a) The omnidirectional camera 20 is replaced with a camera (an oscillating camera) that follows the user U by changing shooting directions through a motor oscillating mechanism.
(b) The LiDAR 21 is eliminated by using a compound-eye camera for the oscillating camera in (a) to make it possible to measure the distance.
(c) The LiDAR 21 is eliminated by configuring the omnidirectional camera 20 by using a compound-eye camera.

The traveling unit 10 includes a left drive wheel 12 and a right drive wheel 15 and causes the shopping cart 1 to travel in a self-propelled manner. The traveling unit 10 corresponds to a propelling unit of the present invention. The omnidirectional camera 20 shoots surroundings of the shopping cart 1 in a 360-degree range. The LiDAR 21 detects a location of an object in the surroundings (a direction of the object relative to the shopping cart 1 and a distance from the shopping cart 1 to the object) by scanning the surroundings of the shopping cart 1 in the 360-degree range. Thus, the bearing and the distance of the user U can be constantly identified by the LiDAR 21 while the user U is recognized by the omnidirectional camera 20.

The forward camera 22 shoots a front (a traveling direction) of the shopping cart 1. Note that the function of the forward camera 22 may be replaced by the omnidirectional camera 20. The speaker 23 outputs an audio guidance and the like to the user U. The microphone 24 receives an input of an audio instruction and the like made by the user U. The touch panel 25 is configured in such a manner that touch switches are arranged on a surface of a flat display such as a liquid crystal display, and detects a location of a touch made by the user U and displays various screens.

The card reader 26 reads information recorded on a membership card 81 for the store 200 owned by the user U. The membership card 81 in the present embodiment includes a credit card function. The communication unit 27 wirelessly communicates with a store management system 210 provided to the store 200 and with a communication terminal 80 such as a smartphone owned by the user U. The control unit 30 controls entire operation of the shopping cart 1 and acquires various information by communicating via the communication unit 27 with the store management system 210 provided to the store 200.

The store management system 210 communicates with a store group server 400, a smart home server 410, a cooking recipe server 420, and a card company server 430 via a communication network 500. The store management system 210 includes a product DB (database) 211 in which prices of products that are sold in the store 200 are recorded. The store group server 400 includes a store DB (data base) 401 in which information on each store operated by a retailer that operates the store 200 is recorded, and a membership DB 402 in which information on members who use each store is recorded. In the membership DB 402, a profile of each user who is registered as a member of each store and a membership ID (identification) issued for the user are recorded.

The smart home server 410 receives ingredient stock data Stk_dat transmitted from a smart home unit 310 installed in a home 300 of the user U and records the ingredient stock data Stk_dat in a stock DB 411. The smart home unit 310 recognizes a stock state of ingredients contained in a refrigerator 301, a storage shelf (not shown), and the like placed in the home 300 of the user U through image recognition by a camera (not shown), and generates the ingredient stock data Stk_dat. Note that the stock state of the ingredients may be transmitted from the communication terminal 80 to the smart home unit 310 in such a manner that communication is performed between the smart home unit 310 and the communication terminal 80 owned by the user U and the user U inputs the stock state of the ingredients by operating the communication terminal 80.

The smart home server 410 records the ingredient stock data Stk_dat, which indicates stocks of the ingredients at the home 300 of the user U, in the stock DB 411 in association with the membership ID of the user U. For each of other users, the smart home server 410 records ingredient stock data Stk_dat indicating a stock state of ingredients at a home of the user in the stock DB 411 in association with a membership ID of the user.

When the smart home server 410 receives a request to transmit the stock state with the specified membership ID from the store management system 210, the smart home server 410 transmits the ingredient stock data Stk_dat that is recorded in the stock DB 411 in association with the specified membership ID to the store management system 210. The cooking recipe server 420 includes a cooking recipe DB 421 in which recipe data on various dishes is recorded, and transmits recipe information on a dish requested by the store management system 210 to the store management system 210.

The card company server 430 is operated by a settlement service provider for payment by credit card, and includes a credit DB 431 in which credit information on each credit card member is recorded in association with a credit card number that is identification information issued to the credit card member. The card company server 430 includes a terminal apparatus function. When the user U selects payment by credit card, the control unit 30 of the shopping cart 1 reads the credit card number on the membership card 81 through the card reader 26.

The control unit 30 then transmits settlement request information indicating the credit card number and an amount to be paid to the card company server 430. In response to the settlement request information, the card company server 430 performs processing of paying for a purchased product by the membership card 81. The settlement request information from the control unit 30 to the card company server 430 may be transmitted via the store management system 210, or may be directly transmitted from the control unit 30 to the store management system 210.

[2. Configuration of shopping cart]

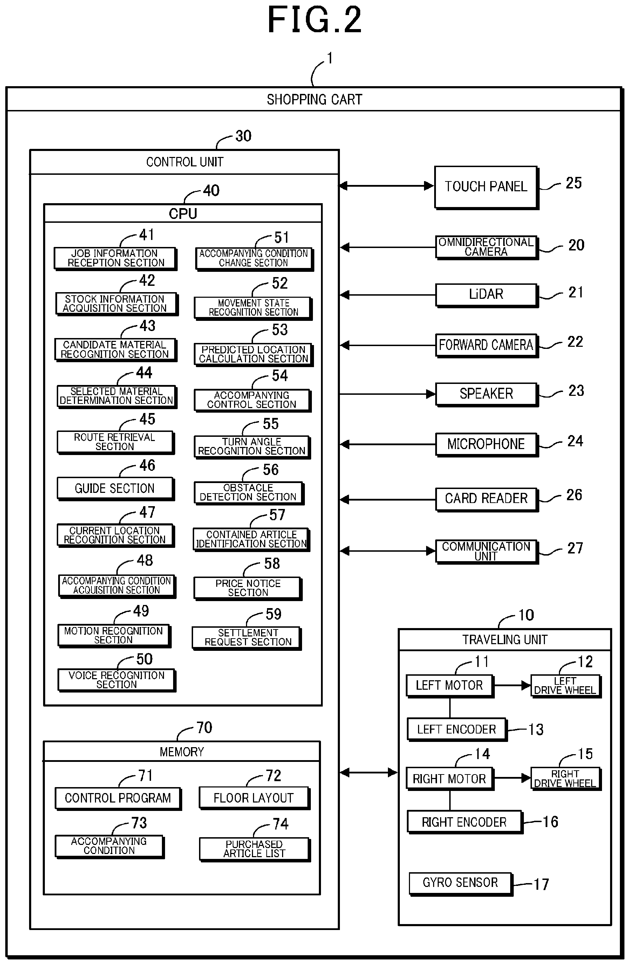

A configuration of the shopping cart 1 will be described with reference to Figures 2 to 4. Referring to Figure 2, the control unit 30 is connected to the touch panel 25, the omnidirectional camera 20, the LiDAR 21, the forward camera 22, the speaker 23, the microphone 24, the card reader 26, the communication unit 27, and the traveling unit 10.

The traveling unit 10 includes a left motor 11 that drives the left drive wheel 12, a left encoder 13 that outputs one pulse signal each time the left motor 11 rotates by a first defined angle, a right motor 14 that drives the right drive wheel 15, a right encoder 16 that outputs one pulse signal each time the right motor 14 rotates by a second defined angle, and a gyro sensor 17 that detects an angular velocity of the shopping cart 1. The traveling unit 10 causes the shopping cart 1 to move in a straight line by making the left drive wheel 12 and the right drive wheel 15 have the same rotating speed, and causes the shopping cart 1 to turn round by making the left drive wheel 12 and the right drive wheel 15 have different rotating speeds or rotating directions.

The control unit 30 is an electronic circuit unit including a CPU (Central Processing Unit) 40, a memory 70, and the like. A control program 71 for the shopping cart 1, floor layout data 72 including information on a floor layout of the store 200, accompanying condition data 73 including information on an accompanying condition of the shopping cart 1, which will be described later, and purchased article list data 74 including information on a purchased article list, which will be described later, are stored in the memory 70.

The CPU 40 functions as a job information reception section 41, a stock information acquisition section 42, a candidate material recognition section 43, a selected material determination section 44, a route retrieval section 45, a guide section 46, a current location recognition section 47, and an accompanying condition acquisition section 48, by reading and executing the control program 71 stored in the memory 70. The CPU 40 further functions as a motion recognition section 49, a voice recognition section 50, an accompanying condition change section 51, a movement state recognition section 52, a predicted location calculation section 53, an accompanying control section 54, a turn angle recognition section 55, an obstacle detection section 56, a contained article identification section 57, a price notice section 58, and a settlement request section 59.

The job information reception section 41 receives a job that uses a product sold at the store 200, in response to an operation made by the user on the touch panel 25. In the present embodiment, since the store 200 is a store selling food, the job information reception section 41 receives a job of cooking a dish. For example, when the store 200 is a store dealing in DIY (do-it-yourself) materials such as a home center, the job information reception section 41 receives a job of making craftwork, repairing a house, or the like.

The stock information acquisition section 42 acquires information on the stocks of the ingredients at the home 300 of the user U from the smart home server 410 via the store management system 210. When the job of cooking a dish is received by the job information reception section 41, the candidate material recognition section 43 accesses the cooking recipe server 420 via the store management system 210 and acquires recipe information on the received dish. The candidate material recognition section 43 then extracts candidate materials required for the dish based on the recipe information.

Note that a configuration may be made such that the job information reception section 41 transmits information on a dish selected by the user U to the cooking recipe server 420 via the store management system 210, and the cooking recipe server 420 extracts candidate materials required for the dish and transmits candidate material information indicating the candidate materials to the shopping cart 1. In case of such a configuration, the candidate material recognition section 43 recognizes the candidate materials required for the dish from the candidate material information.

The selected material determination section 44 determines all or part of the candidate materials recognized by the candidate material recognition section 43 as selected materials to be purchased, in response to an operation made by the user on the touch panel 25. The route retrieval section 45 retrieves a route or routes that pass places where the selected materials are placed in the store 200 by referring to the floor layout data 72, and determines an optimal shopping route. Note that floor layout information may be acquired from the store management system 210 or the store group server 400. The guide section 46 displays the shopping route determined by the route retrieval section 45 on the touch panel 25 and guides the user U along the shopping route by causing the shopping cart 1 to move along the shopping route.

The current location recognition section 47 calculates an amount of movement of the shopping cart 1 from a reference location in the store 200 by counting pulse signals output from the left encoder 13 and pulse signals output from the right encoder 16. The reference location in the store 200 is set at, for example, a shopping cart station. The current location recognition section 47 recognizes a moving direction of the shopping cart 1 from a detection signal of the gyro sensor 17. The current location recognition section 47 detects a current location of the shopping cart 1 in the store 200, based on the amount of movement of the shopping cart 1 from the reference location and the moving direction of the shopping cart 1. Note that a detected value of the current location of the shopping cart 1 may be adjusted based on an image of an inside of the store 200 shot by the omnidirectional camera 20 or the forward camera 22.

A configuration may be made such that the shopping cart 1 receives signals transmitted from beacons deployed at a predetermined interval in the store, whereby the current location recognition section 47 recognizes the current location of the shopping cart 1. Alternatively, a configuration may be made such that the store management system 210 or the store group server 400 detects the current location of the shopping cart 1 from images shot by cameras deployed in the store and transmits current location information indicating the current location to the shopping cart 1, and the current location recognition section 47 recognizes the current location of the shopping cart 1 from the current location information.

The accompanying condition acquisition section 48 acquires an initial value of the accompanying condition used when the shopping cart 1 moves accompanying the user U, by referring to the accompanying condition data 73 stored in the memory 70. In the present embodiment, a direction of the shopping cart 1 (corresponding to a specified direction in the present invention, such as forward, backward, rightward, leftward, diagonally forward right, diagonally forward left, diagonally backward right, or diagonally backward left) relative to the user U, and a distance between the user U and the shopping cart 1 (corresponding to a specified distance in the present invention) are specified as accompanying conditions. Hereinafter, a direction set in the accompanying conditions will be referred to as the specified direction, and a distance set in the accompanying conditions will be referred to as the specified distance. Note that the initial values of the accompanying conditions may be acquired from the store management system 210 or the store group server 400.

The motion recognition section 49 recognizes a motion of the user U, based on an image of the user U shot by the omnidirectional camera 20. The voice recognition section 50 recognizes voice of the user U collected by the microphone 24. When a gesture instructing a change in the accompanying conditions, or a change in a line of sight of the user U, is recognized by the motion recognition section 49, or when voice instructing a change in the accompanying conditions is recognized by the voice recognition section 50, the accompanying condition change section 51 changes the accompanying conditions (one or both of the specified direction and the specified distance) in accordance with a result of the recognition.

The movement state recognition section 52 recognizes a state of movement of the user U, based on an image of the user U shot by the omnidirectional camera 20 and a location of the user U detected by the LiDAR 21. The predicted location calculation section 53 calculates a predicted location of the user U after a first predetermined time period, based on the state of movement of the user U recognized by the movement state recognition section 52. The accompanying control section 54 performs accompanying control to cause the shopping cart 1 to accompany the user U, by causing the shopping cart 1 to travel to a target location of accompanying, which is a location apart from the predicted location of the user U calculated by the predicted location calculation section 53 by the specified distance in the specified direction that are set in the accompanying conditions.

By setting the target location of accompanying according to the state of movement of the user U and causing the shopping cart 1 to travel as described above, the ability of the shopping cart 1 to follow the movement of the user U can be enhanced.

The turn angle recognition section 55 recognizes an angle of a turn made by the user U, based on the state of movement of the user U recognized by the movement state recognition section 52. The obstacle detection section 56 detects an obstacle existing in the traveling direction of the shopping cart 1, based on an image shot by the forward camera 22 and a location of an object detected by the LiDAR 21.

The contained article identification section 57 recognizes that an article (a product in the present embodiment) is contained in the basket 5, based on an image shot by the omnidirectional camera 20. Moreover, the contained article identification section 57 identifies the product by analyzing the image of the product contained in the basket 5, or reading an identification code such as a bar code attached to the product from the image. The price notice section 58 inquires about a price of the product by transmitting information (a name, the identification code, or the like) on the product identified by the contained article identification section 57 to the store management system 210. In response to the inquiry, the store management system 210 acquires the price of the product by referring to the product DB 211 and transmits price information indicating the price of the product to the control unit 30. The price notice section 58 recognizes the price of the product from the price information and displays the price of the product on the touch panel 25.

When the user U makes an instruction to pay by card, for example, by touching a "settlement button" (not shown) displayed on the touch panel 25, the settlement request section 59 reads the credit card number on the membership card owned by the user U through the card reader 26. The settlement request section 59 then requests card settlement by transmitting settlement request information including the credit card number and a sum of the prices of products recognized by the price notice section 58 to the card company server 430. Note that a configuration may be made such that a cash insertion slot is provided on the shopping cart 1 to make cash payment possible.

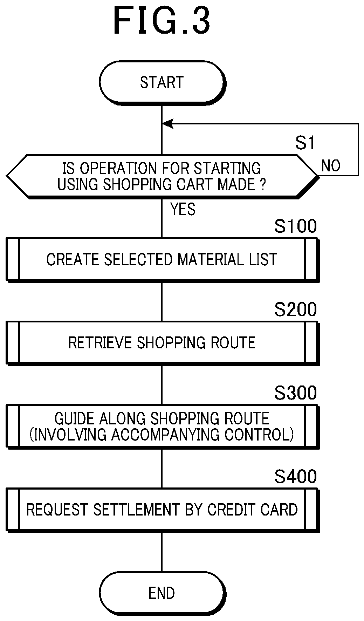

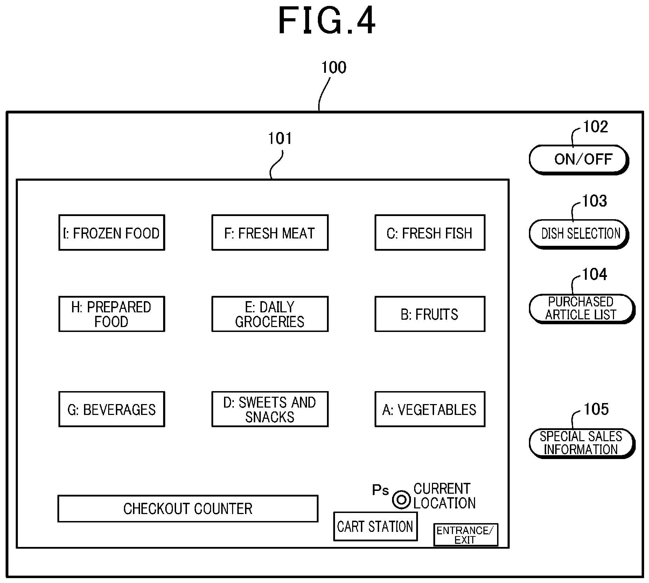

The control unit 30 assists the user U in shopping at the store 200 by executing a series of processing according to a flowchart shown in Figure 3. When an operation for starting using the shopping cart 1 made by the user U is recognized in step S1 in Figure 3, the job information reception section 41 of the control unit 30 displays an initial guide screen 100 as shown in Figure 4 on the touch panel 25. Referring to Figure 4, a floor layout 101 that presents a sales floor layout of the store 200 and an ON/OFF button 102 that gives instructions to start and to finish using the shopping cart 1 are displayed in the initial guide screen 100.

Moreover, a dish selection button 103 for giving an instruction to use an ingredient search menu according to a dish, a purchased article list button 104 for giving an instruction to display the purchased article list that presents products put in the basket 5 by the user U in a list form, and a special sales information button 105 for giving an instruction to display special sales information are displayed in the initial guide screen 100.

The job information reception section 41 recognizes an image part of the user U located behind the shopping cart 1 from an image shot by the omnidirectional camera 20. The job information reception section 41 then extracts information that can identify the user U (information indicating a characteristic such as a face, a body shape, or clothes of the user U) from the image part of the user U, and stores the information that can identify the user U in the memory 70. The motion recognition section 49 and the movement state recognition section 52 identifies and extracts an image part of the user U from an image shot by the omnidirectional camera 20 by using the information that can identify the user U stored in the memory 70, and recognizes a motion or a state of movement of the user U.

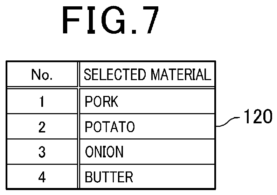

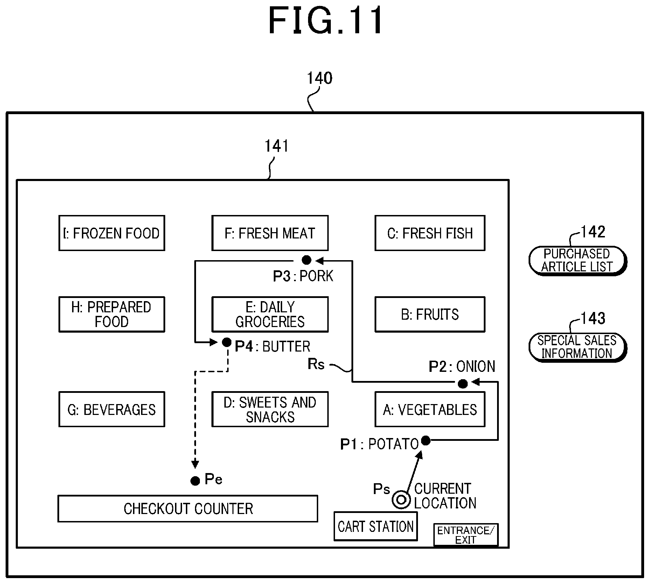

When an operation of touching the dish selection button 103 is detected, the control unit 30 advances the processing to step S100 and executes processing of "creating a selected material list". Through the processing of "creating a selected material list", the control unit 30 creates a selected material list (see Figure 7, which will be described later) in which materials to be purchased this time, among materials to be used for the dish, are listed. In subsequent step S200, the control unit 30 executes processing of "retrieving a shopping route". Through the processing of "retrieving a shopping route", the control unit 30 retrieves a shopping route (see Figure 11, which will be described later) that is a route to each of display places of the selected materials listed in the selected material list.

In subsequent step S300, the control unit 30 executes processing of "guiding along the shopping route". Through the processing of "guiding along the shopping route", the control unit 30 causes the shopping cart 1 to guide the user U to each of the display places of the selected materials by causing the shopping cart 1 to travel along the shopping route, while causing the shopping cart 1 to accompany the user U and move through the accompanying control. In subsequent step S400, the control unit 30 executes processing of "requesting settlement by credit card". Through the processing of "requesting settlement by credit card", the control unit 30 requests card settlement to pay for the products contained in the basket 5 of the shopping cart 1, in response to an instruction made by the user U through an operation for card settlement.

Hereinafter, details of each processing of "creating a selected material list", "retrieving a shopping route", "guiding along the shopping route", and "requesting settlement by credit card " will be described.

[3. Creating selected material list]

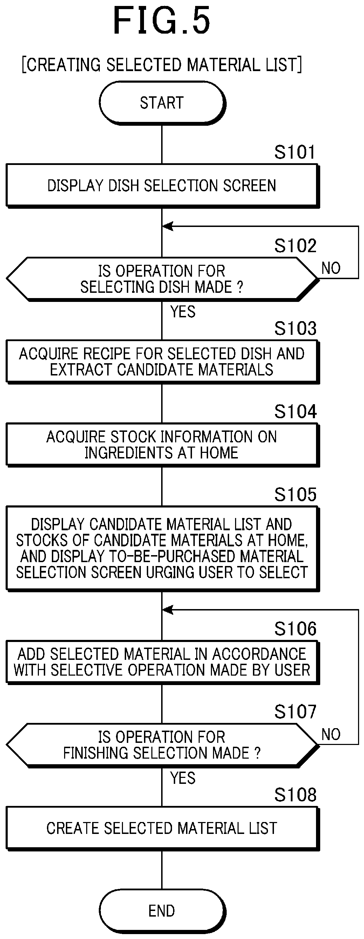

The processing of "creating a selected material list" will be described, following a flowchart shown in Figure 5. In step S101 in Figure 5, the job information reception section 41 displays a dish selection screen on the touch panel 25. When an operation for selecting a job of cooking a dish is made by the user U, the job information reception section 41 advances the processing to step S103. Hereinafter, a description will be given of a case where the user U selects a dish of pork curry.

In step S103, the candidate material recognition section 43 accesses the cooking recipe server 420 via the store management system 210 and acquires a recipe for pork curry. The candidate material recognition section 43 then extracts candidate materials required for the dish of pork curry by referring to the acquired recipe. In subsequent step S104, the stock information acquisition section 42 accesses the smart home server 410 via the store management system 210. The stock information acquisition section 42 then acquires the ingredient stock data Stk_dat on the home 300 of the user U recorded in the stock DB 411.

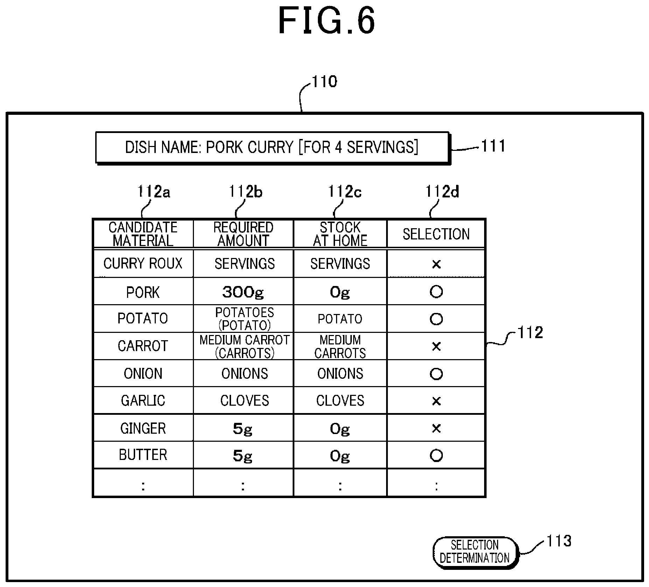

Subsequent steps S105 to S107 are processing by the selected material determination section 44. In step S105, the selected material determination section 44 displays a to-be-purchased material selection screen 110 as shown in Figure 6 on the touch panel 25, based on the candidate materials extracted by the candidate material recognition section 43 and the ingredient stock data Stk_dat.

As shown in Figure 6, a dish name 111, a candidate material list 112, and a selection determination button 113 are displayed in the to-be-purchased material selection screen 110. In the candidate material list 112, a candidate material name 112a, a required amount 112b of each candidate material, a home stock 112c of each candidate material, and a selection check field 112d for each candidate material are displayed. By having a look at the to-be-purchased material selection screen 110, the user U can select a material to be purchased this time among the candidate materials, while taking the home stock into consideration. The user U specifies a selected material that is a material to be purchased, by making an operation of touching the selection check field 112d for a candidate material the user U wants to purchase.

Through a loop of subsequent steps S106 and S107, the selected material determination section 44 adds a selected material in response to a selective operation made by the user U in step S106 until an operation of touching the selection determination button 113 is made in step S107. When an operation of touching the selection determination button 113 is made in step S107, the selected material determination section 44 advances the processing to step S108 and creates a selected material list 120 as shown in Figure 7.

[4. Retrieving shopping route]

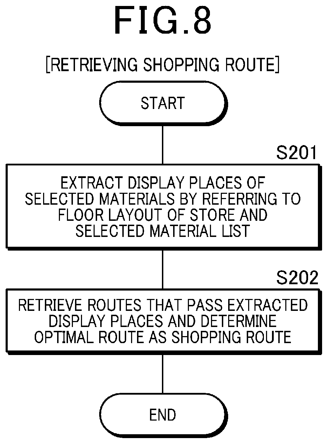

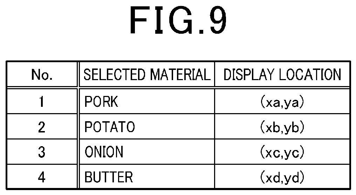

The processing of "retrieving a shopping route" will be described, following a flowchart shown in Figure 8. In step S201 in Figure 8, the route retrieval section 45 refers to the floor layout of the store 200 recorded in the floor layout data 72 and extracts display locations (locations) of the selected materials listed in the selected material list 120. As shown in Figure 9, the display locations of the selected materials are specified by two-dimensional coordinates on a floor of the store 200. In the example shown in Figure 9, for example, the display location of pork is (xa, ya).

In subsequent step S202, the route retrieval section 45 retrieves a route or routes that pass the display locations of the selected materials, with the current location of the shopping cart 1 detected by the current location recognition section 47 as a starting point. The route retrieval section 45 then determines a route with a shortest travel distance as a shopping route. Note that the shopping route may be determined by taking types of the selected materials into consideration. For example, when the selected materials include a first ingredient that does not require refrigerating or freezing and a second ingredient that requires refrigerating or freezing, the shopping route may be determined such as to arrive at a location of the first ingredient first and then arrive at a location of the second ingredient.

[5. Guiding along shopping route]

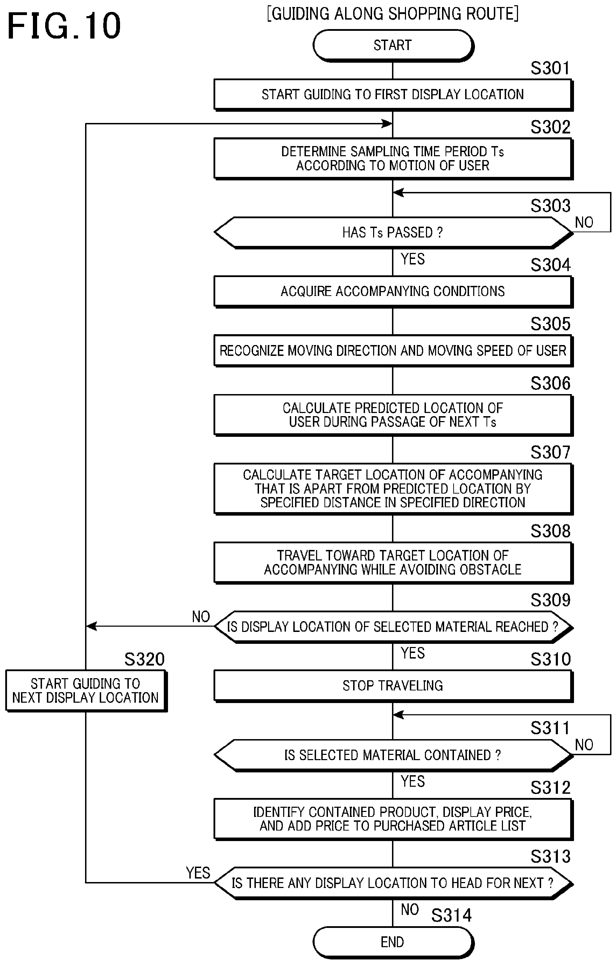

The processing of "guiding along the shopping route" will be described, following a flowchart shown in Figure 10. In step S301 in Figure 10, the guide section 46 displays a shopping route guide screen 140 as shown in Figure 11 on the touch panel 25 and starts guiding along the shopping route. A floor layout 141 of the store 200 is displayed in the shopping route guide screen 140, and the shopping route Rs is presented on the floor layout 141.

The shopping route Rs is a route that passes the cart station that is the current location Ps of the shopping cart 1, P1 that is the display location of potatoes in a vegetables corner A, P2 that is the display location of onions in the vegetables corner A, P3 that is the display location of pork in a fresh meat corner F, and P4 that is the display location of butter in a daily groceries corner E, in the above-mentioned order.

The guide section 46 presents the shopping route Rs on the floor layout 141 and guides the user U along the shopping route by controlling operations of the left motor 11 and the right motor 14 of the traveling unit 10 to cause the shopping cart 1 to travel along the shopping route. Note that after guiding along the shopping route is finished, the guide section 46 may guide the user U along a route to a checkout counter when the user U pays at the checkout counter, or may guide the user U along a route to an entrance/exit when the user U has completed payment through card settlement, which will be described later.

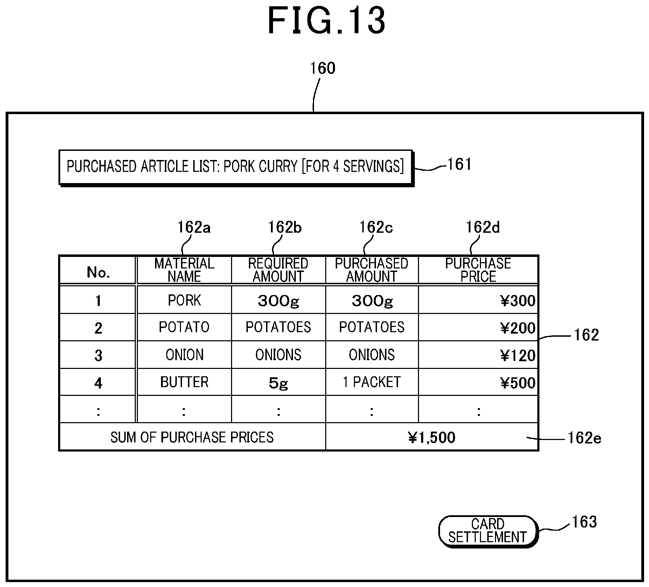

In the shopping route guide screen 140, a purchased article list button 142 and a special sales information button 143 are displayed in addition to the floor layout 141. When the purchased article list button 142 is operated, the price notice section 58 displays a purchased article list screen 160 as shown in Figure 13 on the touch panel 25. When the special sales information button 143 is operated, the guide section 46 displays information on bargain-priced articles offered at the store 200 on the touch panel 25.

When the user U selects a bargain-priced article in the screen displaying the information on the bargain-priced articles, the selected material determination section 44 adds the selected bargain-priced article to the selected material list 120. The route retrieval section 45 then re-retrieves a route or routes and determines a shopping route that passes a display place of the selected bargain-priced article.

A loop of subsequent steps S302 to S309 is processing for performing the accompanying control to cause the shopping cart 1 to accompany the user U when the shopping cart 1 is caused to travel along the shopping route and guide the user U along the shopping route. In step S302, the accompanying control section 54 determines a sampling cycle Ts used when the shopping cart 1 is caused to move in response to a motion of the user U recognized by the motion recognition section 49 through the looped processing in steps S302 to S309.

Since processing in and after step S304 is performed after a wait for passage of Ts in subsequent step S303, the accompanying control section 54 can change an interval at which the looped processing in steps S302 to S309 is performed, by changing Ts.

More specifically, when any of motions (1) to (3) described below is recognized by the motion recognition section 49, the accompanying control section 54 makes the sampling cycle Ts shorter than an initial value.

(1) The user U changes the traveling direction by an angle not smaller than a first predetermined angle.
(2) The user U changes the direction of the head or body by an angle not smaller than a second predetermined angle.
(3) The user U changes the direction of the line of sight by an angle not smaller than a third predetermined angle.

The first to third predetermined angles are set at, for example, 90 degrees. The first to third predetermined angles may be set at the same angle, or may be set at different angles.

When any of the above-described motions (1) to (3) is recognized, it is highly possible that the traveling direction of the user U has been abruptly changed, or that the traveling direction of the user U will be abruptly changed. Accordingly, the accompanying control section 54 makes the sampling cycle Ts shorter than the initial value, whereby responsiveness of the shopping cart 1 to an abrupt change in the traveling direction of the user U is enhanced, and thus the shopping cart 1 is prevented from making delay in accompanying.

In subsequent step S304, the accompanying control section 54 acquires the initial values of the accompanying conditions recorded in the accompanying condition data 73. For the initial values of the accompanying conditions, for example, the specified direction is set at a forward direction, and the specified distance is set at 30 cm. The user U can change the accompanying conditions as needed, which will be described later.

In subsequent step S305, the movement state recognition section 52 recognizes a moving direction and a moving speed of the user U, based on an image of the user U shot by the omnidirectional camera 20 and a location of the user U detected by the LiDAR 21. In step S306, the predicted location calculation section 53 calculates a predicted location of the user U during passage of next Ts, based on the moving direction and the moving speed of the user U recognized by the movement state recognition section 52.

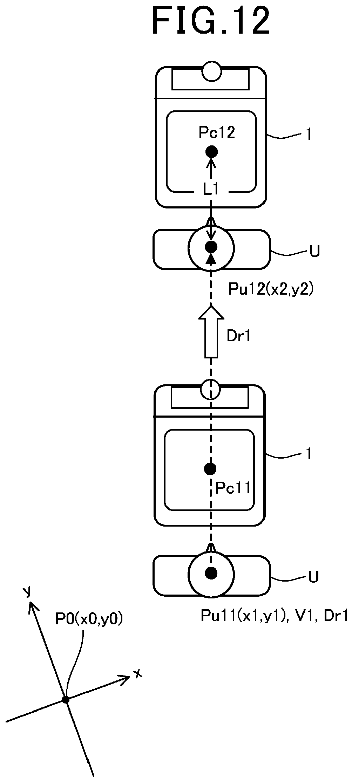

In subsequent step S307, the accompanying control section 54 calculates a target location of accompanying that is apart from the predicted location of the user U calculated by the predicted location calculation section 53 by the specified distance in the specified direction. Here, Figure 12 shows an example where the target location of accompanying is calculated in a situation where the user U moves in a straight line. In Figure 12, the current location of the user U is represented by Pu11(x1, yl), the current location of the shopping cart 1 is represented by Pc11, and the predicted location of the user U after Ts is represented by Pu12(x2, y2).

When the moving direction and the moving speed of the user U recognized at Pu11(x1, y1) by the movement state recognition section 52 are Dr1 and V1, respectively, the predicted location calculation section 53 calculates the predicted location Pu12(x2, y2) by using the following equations (1) and (2):

$$x2 = x1 + V1\_x \times Ts \quad \ldots \ldots \quad (1)$$

$$y2 = y1 + V1\_y \times Ts \quad \ldots \ldots \quad (2)$$

where V1_x is an x component of the speed V1 in the direction Dr1, and V1_y is a y component of the speed V1 in the direction Dr1.

The accompanying control section 54 calculates, as the target location of accompanying, a location Pc12 that is apart from the predicted location Pu12(x2, y2) by the specified distance L1 in the specified direction (here, the forward direction of the user U). In step S308, the accompanying control section 54 causes the shopping cart 1 to travel in such a manner that the shopping cart 1 arrives at the target location of accompanying when Ts passes.

While the accompanying control section 54 causes the shopping cart 1 to travel, the obstacle detection section 56 detects an obstacle existing in front of the shopping cart 1, based on an image shot by the forward camera 22 and a location of an object detected by the LiDAR 21. When an obstacle is detected by the obstacle detection section 56, the accompanying control section 54 performs processing for avoiding contact with the obstacle. For the processing for avoiding contact with the obstacle, processing of changing the traveling direction of the shopping cart 1 such as to avoid the obstacle, processing of causing the shopping cart 1 to stop, giving the user notice of the existence of the obstacle, and urging the user to change the traveling direction, or the like can be performed.

Here, when the user U deviates from the shopping route by a predetermined distance or longer, the guide section 46 displays a screen urging the user U to return to the shopping route on the touch panel 25, or gives notice by outputting an audio guidance urging the user U to return to the shopping route from the speaker 23. The guide section 46 may be configured to re-retrieve a shopping route.

In subsequent step S309, the guide section 46 determines whether or not the shopping cart 1 has arrived at the display place of a selected material, based on the current location of the shopping cart 1 detected by the current location recognition section 47. When the shopping cart 1 has arrived at the display place of a selected material, the guide section 46 advances the processing to step S310 and causes the shopping cart 1 to stop traveling. When the shopping cart 1 has not arrived at the display place of a selected material, the guide section 46 advances the processing to step S302.

In step S311, when the contained article identification section 57 recognizes that the selected material is contained in the basket 5 based on an image shot by the omnidirectional camera 20, the processing is advanced to step S312. Note that when the guide section 46 determines in step S309 that the shopping cart 1 has arrived at the display place of a selected material, or when the contained article identification section 57 recognizes in step S311 that the selected material is contained in the basket 5, a display of the selected material shelved at the reached display place or the selected material contained in the basket 5 may be ceased in the shopping route guide screen 140.

In step S312, the price notice section 58 acquires a price of each product additionally contained in the basket 5 by communicating with the store management system 210 and displays the price on the touch panel 25. The price notice section 58 adds the price of each product additionally contained in the basket 5 to a purchased article list 162 as shown in Figure 13 and updates the purchased article list data 74 (see Figure 2) stored in the memory 70.

Figure 13 shows the purchased article list screen 160, which is displayed on the touch panel 25 in response to an operation of the purchased article list button 104 (see Figure 4). In the purchased article list screen 160, a dish name and servings 161 and a card settlement button 163 for instructing card settlement are displayed in addition to the purchased article list 162. When the contained article identification section 57 recognizes that a product other than the materials listed in the selected material list 120 is contained in the basket 5, the price notice section 58 also acquires a price of the product, adds the price of the product to the purchased article list 162, and updates the purchased article list data 74.

In subsequent step S313, the guide section 46 determines whether or not there is any display place to head for next. When there is no display place to head for next, the guide section 46 advances the processing to step S314 and terminates the processing of "guiding along the shopping route". When there is a display place to head for next, the guide section 46 advances the processing to step S320, starts guiding to the next display place, and advances the processing to step S302. Thus, the shopping cart 1 that is waiting in a stopped state resumes traveling.

[6. Accompanying control performed when user abruptly turns]

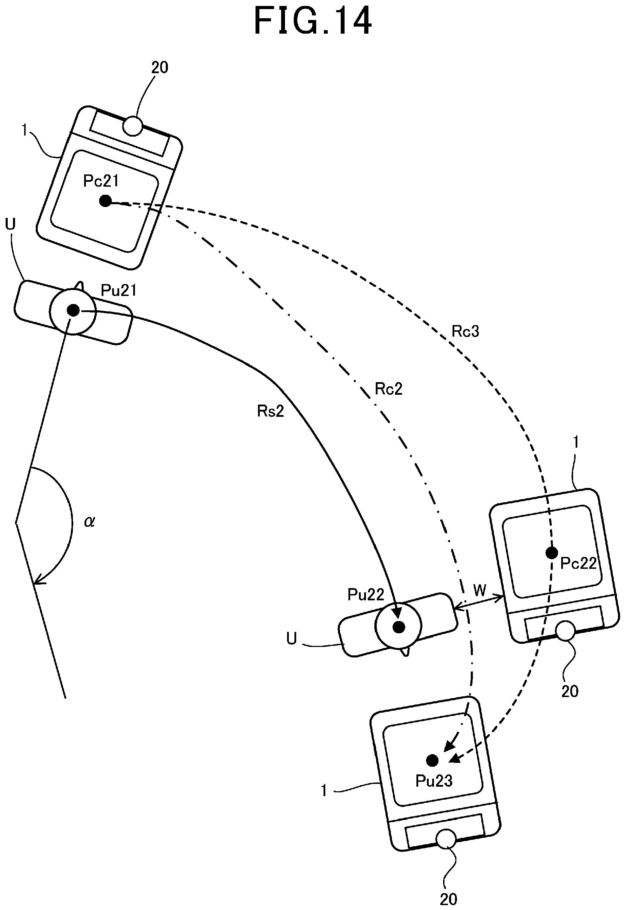

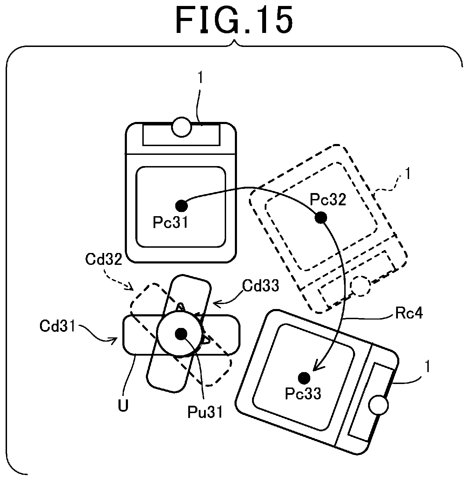

A description will be given of control performed when the user U abruptly turns while the accompanying control section 54 performs the accompanying control, with reference to Figures 14 and 15. Figure 14 shows an example where the user U makes a turn while moving, and Figure 15 shows an example where the user U turns round at one place without moving.

Figure 14 shows a case where the user U moves from a current location Pu21 to Pu22 along a route Ru2 while making a turn in a situation where the accompanying control to cause the shopping cart 1 to accompany in front of the user U is performed. In such a case, if the shopping cart 1 is caused to travel along a shortest route Rc2 to come around in front of the user U, the shopping cart 1 is likely to make contact with the user U when shopping cart 1 overtakes the user U.

Accordingly, the turn angle recognition section 55 recognizes a turn angle $\alpha$ of the user U, based on the state of movement of the user U recognized by the movement state recognition section 52. When the turn angle $\alpha$ of the user U is not smaller than a fourth predetermined angle (for example, 90 degrees), the accompanying control section 54 causes the shopping cart 1 to come around to a location Pc23 in front of the user U by using a route Rc3 that keeps the distance between the user U and the shopping cart 1 not shorter than a predetermined distance W. Note that the predetermined distance W may be set depending on the turn angle $\alpha$, for example, in such a manner that the predetermined distance W is lengthened as the turn angle $\alpha$ is larger.

Moreover, the accompanying control section 54 performs control to gradually increase the traveling speed of the shopping cart 1 after a state of the shopping cart 1 moving in parallel with the user U near a location Pc22 where the shopping cart 1 overtakes the user U is maintained for a second predetermined time period. Thus, it is made easier for the user U to recognize that the shopping cart 1 is approaching. The shopping cart 1 may be caused to swiftly move and come in front of the user U by setting the moving speed of the shopping cart 1 to increase as the turn angle $\alpha$ of the user U is larger.

When the shopping cart 1 is configured to change a shooting direction not with the omnidirectional camera 20 but by rotating an attachment portion of a camera that shoots a predetermined range, the camera may be turned toward the user U to assuredly check a location of the user U while the shopping cart 1 overtakes the user U.

Next, Figure 15 shows a case where the user U turns round at one place and changes position in order of Cd31, Cd32, and Cd33. In such a case, the turn angle $\alpha$ of the user U recognized by the turn angle recognition section 55 is also not smaller than the fourth predetermined angle. Accordingly, the accompanying control section 54 causes the shopping cart 1 to travel along a route Rc4 that keeps the distance between the user U and the shopping cart 1 not shorter than the predetermined distance W, as described above. Figure 15 shows an example where the accompanying control section 54 sets the route Rc4 to be an arc of a circle centering around a location Pu31 of the user U.

Note that when the user U turns round at one place, the shopping cart 1 may be caused to start traveling at a timing when a predetermined time period passes, without causing the shopping cart 1 to immediately start traveling. Thus, the shopping cart 1 can be restrained from frequently moving around the user U in response to a minor turning action of the user U.

[7. Changing accompanying conditions]

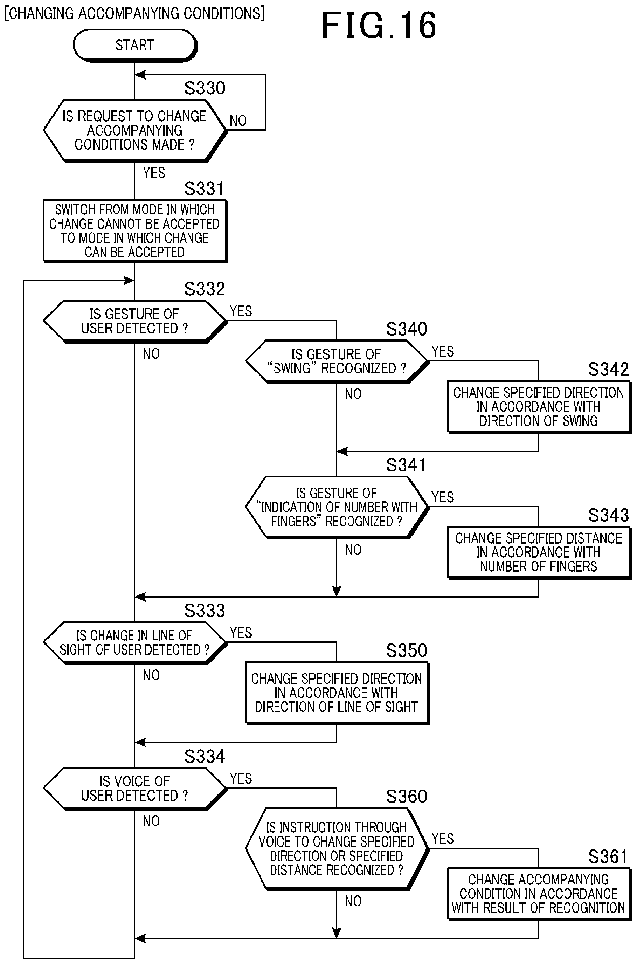

The processing of "changing the accompanying conditions" will be described, following a flowchart shown in Figure 16. The accompanying condition change section 51 changes the specified direction and the specified distance that are the accompanying conditions in response to an instruction from the user U while the accompanying control is performed by the accompanying control section 54, by performing the processing according to the flowchart shown in Figure 16.

In step S330 in Figure 16, the accompanying condition change section 51 determines whether or not a request to change the accompanying conditions is made by the user U. When any of change request conditions 1 to 3 described below is met, the accompanying condition change section 51 determines that a request to change the accompanying conditions is made, and advances the processing to step S331.

Change request condition 1: the motion recognition section 49 recognizes a gesture of the user U such as waving a palm (corresponding to a second predetermined motion in the present invention), from an image shot by the omnidirectional camera 20.

Change request condition 2: the voice recognition section 50 recognizes voice produced by the user such as "want to change the accompanying conditions" (corresponding to predetermined voice in the present invention), from an audio signal collected by the microphone 24.

Change request condition 3: the motion recognition section 49 recognizes that the user U directs the line of sight toward the omnidirectional camera 20 for a predetermined time period (corresponding to a second predetermined time period in the present invention) or longer (corresponding to the second predetermined motion in the present invention), from an image shot by the omnidirectional camera 20. A location of the omnidirectional camera 20 corresponds to a predetermined location in the present invention.

Here, when the accompanying condition change section 51 determines that a request to change the accompanying conditions is made, notice of a way of moving the shopping cart 1 thereafter (for example, a way of giving instructions on operations through gestures) may be given through a display on the touch panel 25 or an output of an audio guidance from the speaker 23.

In step S331, the accompanying condition change section 51 switches from an accompanying condition change prohibition mode in which acceptance of an instruction to change the accompanying conditions from the user U is prohibited, to an accompanying condition change permission mode in which acceptance of an instruction to change the accompanying conditions from the user U is permitted. By performing the processing of switching modes as described above, the accompanying condition change section 51 can be prevented from erroneously recognizing a motion instinctively made by the user U as an instruction to change the accompanying conditions.

In looped processing in subsequent steps S332 to S334, in step S332, the motion recognition section 49 repeatedly detects presence or absence of a gesture of the user U, based on an image of the user U shot by the omnidirectional camera 20. In step S333, the motion recognition section 49 repeatedly detects a change in the direction of the line of sight of the user U, based on an image of the user U shot by the omnidirectional camera 20. In step S334, the voice recognition section 50 repeatedly detects voice of the user U.

When the motion recognition section 49 detects a gesture of the user U in step S332, the motion recognition section 49 advances the processing to step S340 and determines whether or not the gesture is a "swing of an arm". The motion recognition section 49 advances the processing to step S342 when the gesture is a "swing of an arm", but advances the processing to step S341 when the gesture is not a "swing of an arm". In step S342, the accompanying condition change section 51 changes the specified direction in accordance with a direction of the swing and advances the processing to step S341. The gesture that is the "swing of an arm" corresponds to a first predetermined motion in the present invention.

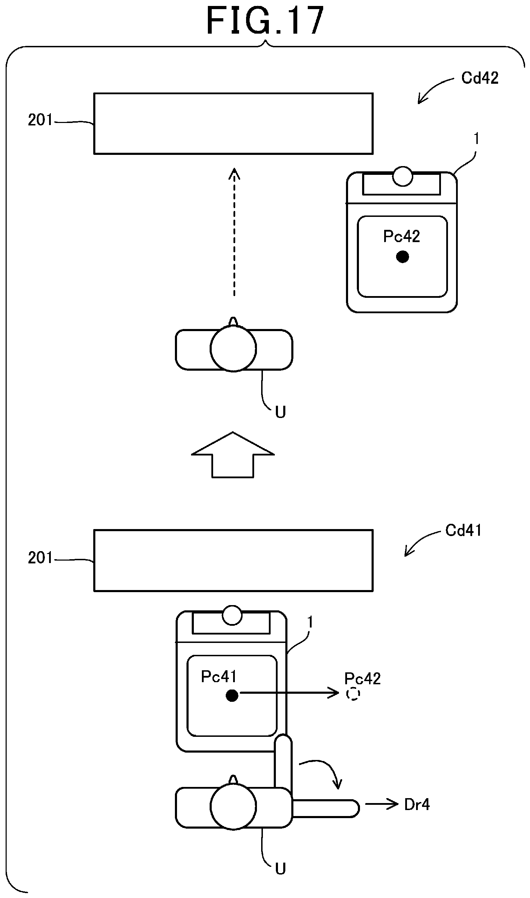

Here, Figure 17 shows an example where the specified direction of the accompanying conditions is changed by a gesture of the user U that is the "swing of an arm". In Figure 17, Cd41 shows a situation where the specified direction is a forward direction, and the user U moves the shopping cart 1 to a right side in order to purchase a product shelved on a display shelf 201 in front of the user U while the shopping cart 1 accompanies in front of the user U. In Cd41, the user U instructs the shopping cart 1 to move in a rightward direction by swinging the right arm from the front toward the right side in a direction Dr4.

In such a case, the accompanying condition change section 51 changes the specified direction of the accompanying conditions from the forward direction to a rightward direction. The accompanying control section 54 then executes a change-responsive movement to cause the shopping cart 1 to travel from a current location Pc41 toward a location Pc42 in the direction Dr4. Thus, as shown in Cd42, the shopping cart 1 moves to the right side of the user U, and the user U can approach the display shelf 201 and pick up the product. Thereafter, when the user U moves and the distance between the user U and the shopping cart 1 becomes equal to or longer than the specified distance, the accompanying control is resumed.

In step S341, the motion recognition section 49 determines whether or not the gesture of the user U is an "indication of a number with fingers". The motion recognition section 49 advances the processing to step S343 when the gesture is an "indication of a number with fingers", and advances the processing to step S333 when the gesture is not an "indication of a number with fingers". In step S343, the accompanying condition change section 51 changes the specified distance of the accompanying conditions in accordance with the number of fingers indicated by the gesture. The gesture that is the "indication of a number with fingers" corresponds to the first predetermined motion in the present invention.

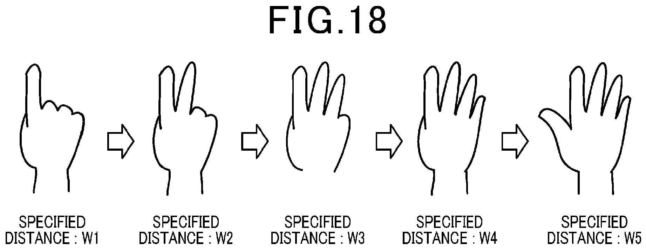

Here, Figure 18 shows an example where the specified distance of the accompanying conditions is changed by a gesture of the user U that is the "indication of a number with fingers". The accompanying condition change section 51 changes the specified distance in such a manner that as the number of fingers indicated by the user U increases like $1 \rightarrow 2 \rightarrow 3 \rightarrow 4 \rightarrow 5$, the specified distance is increased to be $W1 \rightarrow W2 \rightarrow W3 \rightarrow W4 \rightarrow W5$ ($W1 < W2 < W3 < W4 < W5$), respectively. When the accompanying conditions are changed, the accompanying condition change section 51 updates the accompanying condition data 73 (see Figure 2) in accordance with the changed accompanying conditions.

Note that the specified distance of the accompanying conditions may be changed by a gesture of the user U that indicates "go away (an action of shaking fingers toward a far side (a side farther away from the user U))" or a gesture of the user U that indicates "come here (an action of pulling fingers toward a near side (a side closer to the user U))".

In step S334, when the voice recognition section 50 detects voice of the user U, the voice recognition section 50 advances the processing to step S360 and determines whether or not an instruction through the voice to change the specified direction or the specified distance is recognized. The voice recognition section 50 advances the processing to step S361 when an instruction through the voice to change the specified direction or the specified distance is recognized, and advances the processing to step S332 when an instruction through the voice to change the specified direction or the specified distance is not recognized.

When an instruction through the voice of the user U to change the specified direction is recognized, in step S361, the accompanying condition change section 51 changes the specified direction of the accompanying conditions in accordance with the instruction to change. When an instruction through the voice of the user U to change the specified distance is recognized, the accompanying condition change section 51 changes the specified distance of the accompanying conditions in accordance with the instruction to change. The accompanying condition change section 51 then updates the accompanying condition data 73 (see Figure 2) in accordance with the changed accompanying conditions.

When the specified distance is changed by the accompanying condition change section 51 in step S343, when the specified direction is changed by the accompanying condition change section 51 in step S350, or when the specified direction or the specified distance is changed by the accompanying condition change section 51 in step S361, the accompanying control section 54 also executes a change-responsive movement to cause the shopping cart 1 to move to a location according to the changed accompanying conditions.

[8. Requesting settlement by credit card]

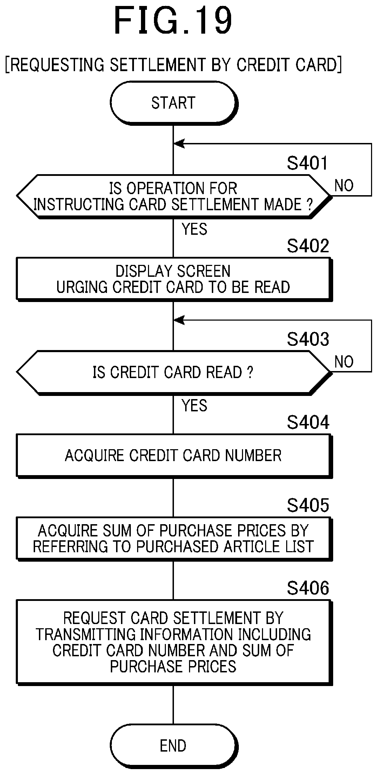

Processing of "requesting settlement by credit card" will be described, following a flowchart shown in Figure 19. In step S401 in Figure 19, when the card settlement button 163 in the purchased article list screen 160 shown in Figure 13 is operated, the settlement request section 59 advances the processing to step S402 and displays a screen urging a credit card to be read on the touch panel 25.

In subsequent step S403, when an operation of allowing the membership card 81 with a credit function to be read by the card reader 26 is made by the user U, the settlement request section 59 advances the processing to step S404. In step S404, the settlement request section 59 acquires the credit card number read by the card reader 26.

In subsequent step S405, the settlement request section 59 acquires a sum of purchase prices by referring to the purchased article list 162 (see Figure 13) recorded in the purchased article list data 74. In subsequent step S406, card settlement is requested by transmitting settlement request information including the credit card number and the sum of the purchase prices to the card company server 430 via the store management system 210. The card company server 430 having received the settlement request information performs card settlement processing for payment.

[9. Other embodiments]

In the above-described embodiment, an example is illustrated where the purchase prices of the products are paid through card settlement by using the membership card 81 with a credit function owned by the user U. As another embodiment, payment may be settled not by using a credit card but by using an identification code such as a QR code(TM) unique to the user U issued by a payment service provider. In such a case, the user U causes the identification code to be displayed on a display unit of the communication terminal 80 owned by the user U and to be read by the omnidirectional camera 20 or a separately provided camera.

The settlement request section 59 then requests to settle payment by transmitting settlement request information including the read identification code and the sum of the purchase prices to a server operated by the payment service provider via the store management system 210.

Although the shopping cart 1 that travels on a floor is illustrated as the accompanying mobile body in the above-described embodiment, the accompanying mobile body may be configured to accompany a user while hovering and moving in the air like a drone. In such a case, a propelling unit for flight such as a rotor is included in place of the traveling unit 10.

Although the control unit 30 of the shopping cart 1 acquires a price of a product by accessing the product DB 211 of the store management system 210 in the above-described embodiment, product price information may be stored in the control unit 30 beforehand. Moreover, although the control unit 30 acquires a floor layout of a store by accessing the store DB 401 of the store group server 400, floor layout information may be stored in the control unit 30 beforehand. Further, although the control unit 30 acquires a recipe for a dish by accessing the cooking recipe DB 421 of the cooking recipe server 420, recipes for dishes that are frequently selected, among the recipes for dishes recorded in the cooking recipe DB 421, may be stored in the control unit 30.

Although an example is illustrated where the job information reception section 41 receives cooking job information in the above-described embodiment, job information is not limited to such an example. For example, job information may be DIY (do-it-yourself) job information such as making craftwork or repairing a house. In case of a DIY job, wood materials, paint, screws, and the like are extracted as candidate materials to be used in DIY work.

Although the shopping cart 1 that assists the user U in purchasing materials is illustrated as the accompanying mobile body in the above-described embodiment, the present invention can also be applied to, for example, a cart and the like for use not in purchasing but in picking up materials for craftwork in a warehouse. The present invention can also be applied to a guide robot and the like that guide along a route to a place where a service is provided, without involving acquisition of materials.

Although the shopping cart 1 that assists the user U in acquiring materials is illustrated as the accompanying mobile body in the above-described embodiment, the accompanying mobile body of the present invention may be a working machine such as a lawn mower or a snowblower. When the accompanying mobile body is a working machine, the user U can efficiently carry out work by changing the specified distance between the user U and the working machine and the specified direction of the working machine relative to the user U depending on details and a situation of the work.

Although the guide section 46 guides along a route to a display place of a selected material, as guiding for the user U to acquire candidate materials in the above-described embodiment, a configuration may be made such that guiding along a route is not performed but a list of the candidate materials is displayed on the touch panel 25. In case of such a configuration, the user U can do the shopping without forgetting to purchase anything while checking the list of the candidate materials displayed on the touch panel 25 of the accompanying shopping cart 1.

Note that Figure 2 is a schematic diagram in which the functional components of the control unit 30 are segmented according to the main processing contents in order to facilitate understanding of the invention of the present application, and the components of the control unit 30 may be configured according to other segmentations. The processing by the individual components may be executed by a single hardware unit, or may be executed by a plurality of hardware units. The processing by the individual components may be executed by using a single program, or may be executed by using a plurality of programs.

[Reference Signs List]

1 ... shopping cart (accompanying mobile body), 10 ... traveling unit (propelling unit), 20 ... omnidirectional camera, 21 ... LiDAR, 22 ... forward camera, 25 ... touch panel, 26 ... card reader, 27 ... communication unit, 30 ... control unit, 40 ... CPU, 41 ... job reception section, 42 ... stock information acquisition section, 43 ... candidate material recognition section, 44 ... selected material determination section, 45 ... route retrieval section, 46 ... guide section, 47 ... current location recognition section, 48 ... accompanying condition acquisition section, 49 ... motion recognition section, 50 ... voice recognition section, 51 ... accompanying condition change section, 52 ... movement state recognition section, 53 ... predicted location calculation section, 54 ... accompanying control section, 55 ... turn angle recognition section, 56 ... obstacle detection section, 57 ... contained article identification section, 58 ... price notice section, 59 ... settlement request section, 70 ... memory, 80 ... communication terminal, 81 ... membership card, 200 ... store, 210 ... store management system, 300 ... home (of user), 400 ... store group server, 410 ... smart home server, 420 ... cooking recipe server, 430 ... card company server, 500 ... communication network

**Claims**

1. An accompanying mobile body that includes a propelling unit (10) and accompanies a user, comprising:

   a movement state recognition section (52) that recognizes a state of movement of the user;
   a predicted location calculation section (53) that calculates a predicted location of the user after a first predetermined time period based on the state of movement of the user;
   an accompanying control section (54) that performs accompanying control to cause the accompanying mobile body to move by the propelling unit (10) toward a target location of accompanying that is a location apart from the predicted location by a specified distance in a specified direction; and

an accompanying condition change section (51) that changes one or both of the specified direction and the specified distance in accordance with an instruction to change from the user, **characterized by** comprising

a motion recognition section (49) that recognizes a motion of the user, wherein

the accompanying condition change section (51) recognizes, when a first predetermined motion is recognized by the motion recognition section (49), the instruction to change corresponding to the first predetermined motion, and

the accompanying condition change section (51) switches, when a second predetermined motion is recognized by the motion recognition section (49) or when predetermined voice is recognized by a voice recognition section (50) comprised in the accompanying mobile body, from an accompanying condition change prohibition mode in which acceptance of the instruction to change is prohibited to an accompanying condition change permission mode in which acceptance of the instruction to change is permitted.

2. The accompanying mobile body according to claim 1, wherein
the accompanying condition change section (51) accepts, when a gesture of the user that is a swing of an arm from the specified direction to another direction is recognized as the first predetermined motion by the motion recognition section (49), an instruction to change the specified direction to the other direction as the instruction to change.

3. The accompanying mobile body according to claim 1 or 2, wherein
the accompanying condition change section (51) accepts, when a gesture of the user that is an indication of a number with fingers is recognized as the first predetermined motion by the motion recognition section (49), an instruction to change the specified distance in accordance with the number with fingers as the instruction to change.

4. The accompanying mobile body according to claim 1, wherein
the accompanying condition change section (51) switches, when the motion recognition section (49) recognizes that the user directs a line of sight toward a predetermined location for a second predetermined time period or longer as the second predetermined motion, from the accompanying condition change prohibition mode to the accompanying condition change permission mode.

5. The accompanying mobile body according to any one of claims 1 to 4, wherein
the accompanying control section (54) executes, when one or both of the specified direction and the specified distance is or are changed by the accompanying condition change section (51), a change-responsive movement to cause the accompanying mobile body to move to a location according to one or both of the changed specified direction and specified distance, and then causes the accompanying mobile body to move through the accompanying control in response to movement of the user.

6. The accompanying mobile body according to claim 5, further comprising a camera (20) capable of changing a shooting direction,
wherein the accompanying control section (54) causes, when the specified direction is changed by the accompanying condition change section (51) to cause the accompanying mobile body to move through the change-responsive movement, the accompanying mobile body to move while turning the camera (20) toward the user.

7. The accompanying mobile body according to any one of claims 1 to 6, further comprising an obstacle detection section (56) that detects an obstacle existing in a traveling direction of the accompanying mobile body,
wherein the accompanying control section (54) performs processing for avoiding contact with the obstacle detected by the obstacle detection section.

8. The accompanying mobile body according to any one of claims 1 to 7, wherein
when the accompanying condition change section (51) determines that a request to change the accompanying condition is made, notice of a way of moving the accompanying mobile body thereafter is given through a display on a touch panel (25) of the accompanying mobile body or an output of an audio guidance from a speaker (23) of the accompanying mobile body.

9. The accompanying mobile body according to any one of claims 1 to 8, wherein after the change of the accompanying condition which changes one or both of the specified direction and the specified distance, when the user moves and a distance between the user and the accompanying mobile body becomes equal to or greater than the specified distance, the accompanying control is resumed.

**Patentansprüche**

1. Mobiler Begleitkörper, welcher eine Antriebsvorrichtung (10) umfasst und einen Benutzer begleitet, umfassend:

einen Bewegungszustand-Erkennungsabschnitt (52), welcher einen Zustand einer Bewegung des Benutzers erkennt;

einen vorhergesagte Position-Berechnungsabschnitt (53), welcher eine vorhergesagte Position des Benutzers nach einer ersten vorbestimmten Zeitperiode auf Grundlage des Zustands der Bewegung des Benutzers berechnet;

einen Begleitung-Steuerabschnitt (54), welcher eine Begleitungssteuerung durchführt, um den mobilen Begleitkörper dazu zu veranlassen, sich durch die Antriebseinrichtung (10) in Richtung einer Zielposition eines Begleitens zu bewegen, welche eine Position um eine spezifizierte Distanz in einer spezifizierten Richtung entfernt von der vorhergesagten Position ist; und

einen Begleitungszustand-Änderungsabschnitt (51), welcher eines oder beide aus der spezifizierten Richtung und der spezifizierten Distanz in Übereinstimmung mit einer Anweisung zu einer Änderung von dem Benutzer ändert, **dadurch gekennzeichnet, dass** er umfasst:

einen Bewegung-Erkennungsabschnitt (49), welcher eine Bewegung des Benutzers erkennt, wobei

der Begleitungszustand-Änderungsabschnitt (51), wenn eine erste vorbestimmte Bewegung von dem Bewegung-Erkennungsabschnitt (49) erkannt wird, die Anweisung zu einer Änderung erkennt, welche der ersten vorbestimmten Bewegung entspricht, und

der Begleitungszustand-Änderungsabschnitt (51), wenn eine zweite vorbestimmte Bewegung von dem Bewegung-Erkennungsabschnitt (49) erkannt wird oder wenn eine vorbestimmte Stimme von einem Stimm-Erkennungsabschnitt (50) erkannt wird, welcher in dem mobilen Begleitkörper umfasst ist, von einem Begleitungszustand-Änderungsverhinderungsmodus, in welchem ein Akzeptieren der Anweisung zu einer Änderung verhindert ist, zu einem Begleitungszustand-Änderungserlaubnismodus umschaltet, in welchem ein Akzeptieren der Anweisung zu einer Änderung erlaubt ist.

2. Mobiler Begleitkörper nach Anspruch 1, wobei der Begleitungszustand-Änderungsabschnitt (51), wenn eine Geste des Benutzers, welche ein Schwingen eines Arms von der spezifizierten Richtung zu einer anderen Richtung ist, als die erste vorbestimmte Bewegung von dem Bewegung-Erkennungsabschnitt (49) erkannt wird, eine Anweisung zu einer Änderung der spezifizierten Richtung zu der anderen Richtung als die Anweisung zu einer Änderung akzeptiert.

3. Mobiler Begleitkörper nach Anspruch 1 oder 2, wobei der Begleitungszustand-Änderungsabschnitt (51), wenn eine Geste des Benutzers, welche eine Anzeige einer Zahl mit Fingern ist, als die erste vorbestimmte Bewegung von dem Bewegung-Erkennungsabschnitt (49) erkannt wird, eine Anweisung zu einer Änderung der spezifizierten Distanz in Übereinstimmung mit der Zahl mit Fingern als die Anweisung zu einer Änderung akzeptiert.

4. Mobiler Begleitkörper nach Anspruch 1, wobei der Begleitungszustand-Änderungsabschnitt (51), wenn der Bewegung-Erkennungsabschnitt (49) erkennt, dass der Benutzer eine Sichtlinie in Richtung einer vorbestimmten Position für eine zweite vorbestimmte Zeitperiode oder länger als die zweite vorbestimmte Bewegung richtet, von dem Begleitungszustand-Änderungsverhinderungsmodus zu dem Begleitungszustand-Änderungserlaubnismodus umschaltet.

5. Mobiler Begleitkörper nach einem der Ansprüche 1 bis 4, wobei der Begleitung-Steuerabschnitt (54), wenn eine oder beide aus der spezifizierten Richtung und der spezifizierten Distanz von dem Begleitungszustand-Änderungsabschnitt (51) geändert wird oder werden, eine Änderungsantwort-Bewegung ausführt, um den mobilen Begleitkörper dazu zu veranlassen, sich zu einer Position gemäß einem oder beiden aus der geänderten spezifizierten Richtung und spezifizierten Distanz zu bewegen, und dann den mobilen Begleitkörper dazu veranlasst, sich durch die Begleitungssteuerung als Reaktion auf eine Bewegung des Benutzers zu bewegen.

6. Mobiler Begleitkörper nach Anspruch 5, ferner umfassend eine Kamera (20), welche in der Lage ist, eine Aufnahmerichtung zu ändern, wobei der Begleitung-Steuerabschnitt (54), wenn die spezifizierte Richtung von dem Begleitungszustand-Änderungsabschnitt (51) geändert wird, um den mobilen Begleitkörper dazu zu veranlassen, sich durch die Änderungsantwort-Bewegung zu bewegen, den mobilen Begleitkörper dazu veranlasst, sich zu bewegen, während die Kamera (20) in Richtung des Benutzers gedreht wird.

7. Mobiler Begleitkörper nach einem der Ansprüche 1 bis 6, ferner umfassend einen Hindernis-Detektionsabschnitt (56), welcher ein Hindernis detektiert, welches in einer Fortbewegungsrichtung des mobilen Begleitkörpers vorliegt, wobei der Begleitung-Steuerabschnitt (54) eine Verarbeitung für ein Verhindern von Kontakt mit dem durch den Hindernis-Detektionsabschnitt detektierten Hindernis durchführt.

8. Mobiler Begleitkörper nach einem der Ansprüche 1 bis 7, wobei
wenn der Begleitungszustand-Änderungsabschnitt (51) bestimmt, dass eine Anfrage für eine Änderung des Begleitungszustands getätigt wird, eine Nachricht über einen Weg eines Bewegens des mobilen Begleitkörpers hiernach durch eine Anzeige an einem Touch-Panel (25) des mobilen Begleitkörpers oder eine Ausgabe einer Audioführung von einem Lautsprecher (23) des mobilen Begleitkörpers ausgegeben wird.

9. Mobiler Begleitkörper nach einem der Ansprüche 1 bis 8, wobei nach der Änderung des Begleitungszustands, welche eines oder beide aus der spezifizierten Richtung und der spezifizierten Distanz ändert, wenn sich der Benutzer bewegt und eine Distanz zwischen dem Benutzer und dem mobilen Begleitkörper gleich oder größer als die spezifizierte Distanz wird, die Begleitungssteuerung wieder aufgenommen wird.

## Revendications

1. Corps mobile d'accompagnement qui comporte une unité de propulsion (10) et accompagne un utilisateur, comprenant :

une section de reconnaissance d'état de déplacement (52) qui reconnaît un état de déplacement de l'utilisateur ;
une section de calcul d'emplacement prédit (53) qui calcule un emplacement prédit de l'utilisateur après une première durée prédéterminée sur la base de l'état de déplacement de l'utilisateur ;
une section de commande d'accompagnement (54) qui réalise une commande d'accompagnement pour amener le corps mobile d'accompagnement à se déplacer grâce à l'unité de propulsion (10) vers un emplacement cible d'accompagnement qui est un emplacement séparé de l'emplacement prédit par une distance spécifiée dans une direction spécifiée ; et
une section de modification de condition d'accompagnement (51) qui modifie l'une ou les deux parmi la direction spécifiée et la distance spécifiée conformément à une instruction de modification provenant de l'utilisateur, **caractérisé par le fait qu'**il comprend
une section de reconnaissance de mouvement (49) qui reconnaît un mouvement de l'utilisateur, dans lequel
la section de modification de condition d'accompagnement (51) reconnaît, lorsqu'un premier mouvement prédéterminé est reconnu par la section de reconnaissance de mouvement (49), l'instruction de modification correspondant au premier mouvement prédéterminé, et
la section de modification de condition d'accompagnement (51) bascule, lorsqu'un deuxième mouvement prédéterminé est reconnu par la section de reconnaissance de mouvement (49) ou lorsqu'une voix prédéterminée est reconnue par une section de reconnaissance vocale (50) comprise dans le corps mobile d'accompagnement, d'un mode d'interdiction de modification de condition d'accompagnement dans lequel l'acceptation de l'instruction de modification est interdite à un mode de permission de modification de condition d'accompagnement dans lequel l'acceptation de l'instruction de modification est permise.

2. Corps mobile d'accompagnement selon la revendication 1, dans lequel
la section de modification de condition d'accompagnement (51) accepte, lorsqu'un geste de l'utilisateur, qui est un balancement d'un bras de la direction spécifiée à une autre direction, est reconnu comme étant le premier mouvement prédéterminé par la section de reconnaissance de mouvement (49), une instruction de modification de la direction spécifiée vers l'autre direction comme étant l'instruction de modification.

3. Corps mobile d'accompagnement selon la revendication 1 ou 2, dans lequel
la section de modification de condition d'accompagnement (51) accepte, lorsqu'un geste de l'utilisateur, qui est une indication d'un nombre avec les doigts, est reconnu comme étant le premier mouvement prédéterminé par la section de reconnaissance de mouvement (49), une instruction de modification de la distance spécifiée conformément au nombre avec les doigts comme étant l'instruction de modification.

4. Corps mobile d'accompagnement selon la revendication 1, dans lequel
la section de modification de condition d'accompagnement (51) bascule, lorsque la section de reconnaissance de mouvement (49) reconnaît que l'utilisateur dirige une ligne de visée vers un emplacement prédéterminé pendant une deuxième durée prédéterminée ou plus longtemps comme étant le deuxième mouvement prédéterminé, du mode d'interdiction de modification de condition d'accompagnement au mode de permission de modification de condition d'accompagnement.

5. Corps mobile d'accompagnement selon l'une quelconque des revendications 1 à 4, dans lequel la section de commande d'accompagnement (54) exécute, lorsque l'une ou les deux parmi la direction spécifiée et la distance spécifiée est ou sont modifiée(s) par la section de modification de condition d'accompagnement (51), un déplacement en réponse à la modification pour amener le corps mobile d'accompagnement à se déplacer jusqu'à un emplacement selon l'une ou les deux parmi la direction spécifiée et la distance spécifiée modifiée(s), et amène ensuite le corps mobile d'accompagnement à se déplacer par le biais de la commande d'accompagnement en réponse à un déplacement de l'utilisateur.

6. Corps mobile d'accompagnement selon la revendication 5, comprenant en outre une caméra (20) capable de modifier une direction de prise de vue, dans lequel la section de commande d'accompagnement (54) amène, lorsque la direction spécifiée est modifiée par la section de modification de condition d'accompagnement (51) pour amener le corps mobile d'accompagnement à se déplacer par le biais du déplacement en réponse à la modification, le corps mobile d'accompagnement à se déplacer tout en tournant la caméra (20) vers l'utilisateur.

7. Corps mobile d'accompagnement selon l'une quelconque des revendications 1 à 6, comprenant en outre une section de détection d'obstacle (56) qui détecte un obstacle existant dans une direction de circulation du corps mobile d'accompagnement, dans lequel la section de commande d'accompagnement (54) réalise un traitement pour éviter un contact avec l'obstacle détecté par la section de détection d'obstacle.

8. Corps mobile d'accompagnement selon l'une quelconque des revendications 1 à 7, dans lequel lorsque la section de modification de condition d'accompagnement (51) détermine qu'une requête de modification de la condition d'accompagnement est effectuée, un avis sur une manière de déplacement du corps mobile d'accompagnement par la suite est donné par le biais d'un affichage sur un panneau tactile (25) du corps mobile d'accompagnement ou d'une sortie d'un guidage audio provenant d'un haut-parleur (23) du corps mobile d'accompagnement.

9. Corps mobile d'accompagnement selon l'une quelconque des revendications 1 à 8, dans lequel après la modification de la condition d'accompagnement qui modifie l'une ou les deux parmi la direction spécifiée et la distance spécifiée, lorsque l'utilisateur se déplace et qu'une distance entre l'utilisateur et le corps mobile d'accompagnement devient égale ou supérieure à la distance spécifiée, la commande d'accompagnement reprend.

# FIG.1

# FIG.2

## SHOPPING CART

### 30 CONTROL UNIT

#### 40 CPU

| | |
|---|---|
| 41 JOB INFORMATION RECEPTION SECTION | 51 ACCOMPANYING CONDITION CHANGE SECTION |
| 42 STOCK INFORMATION ACQUISITION SECTION | 52 MOVEMENT STATE RECOGNITION SECTION |
| 43 CANDIDATE MATERIAL RECOGNITION SECTION | 53 PREDICTED LOCATION CALCULATION SECTION |
| 44 SELECTED MATERIAL DETERMINATION SECTION | 54 ACCOMPANYING CONTROL SECTION |
| 45 ROUTE RETRIEVAL SECTION | 55 TURN ANGLE RECOGNITION SECTION |
| 46 GUIDE SECTION | 56 OBSTACLE DETECTION SECTION |
| 47 CURRENT LOCATION RECOGNITION SECTION | 57 CONTAINED ARTICLE IDENTIFICATION SECTION |
| 48 ACCOMPANYING CONDITION ACQUISITION SECTION | 58 PRICE NOTICE SECTION |
| 49 MOTION RECOGNITION SECTION | 59 SETTLEMENT REQUEST SECTION |
| 50 VOICE RECOGNITION SECTION | |

#### 70 MEMORY

| | |
|---|---|
| 71 CONTROL PROGRAM | 72 FLOOR LAYOUT |
| 73 ACCOMPANYING CONDITION | 74 PURCHASED ARTICLE LIST |

### 25 TOUCH PANEL
### 20 OMNIDIRECTIONAL CAMERA
### 21 LiDAR
### 22 FORWARD CAMERA
### 23 SPEAKER
### 24 MICROPHONE
### 26 CARD READER
### 27 COMMUNICATION UNIT

### 10 TRAVELING UNIT

| | |
|---|---|
| 11 LEFT MOTOR | 12 LEFT DRIVE WHEEL |
| 13 LEFT ENCODER | |
| 14 RIGHT MOTOR | 15 RIGHT DRIVE WHEEL |
| 16 RIGHT ENCODER | |
| 17 GYRO SENSOR | |

# FIG.3

START

S1
IS OPERATION FOR STARTING
USING SHOPPING CART MADE ?          NO

YES

S100
CREATE SELECTED MATERIAL LIST

S200
RETRIEVE SHOPPING ROUTE

S300
GUIDE ALONG SHOPPING ROUTE
(INVOLVING ACCOMPANYING CONTROL)

S400
REQUEST SETTLEMENT BY CREDIT CARD

END

# FIG.4

100

101

| I: FROZEN FOOD | F: FRESH MEAT | C: FRESH FISH |

| H: PREPARED FOOD | E: DAILY GROCERIES | B: FRUITS |

| G: BEVERAGES | D: SWEETS AND SNACKS | A: VEGETABLES |

CHECKOUT COUNTER

Ps ◎ CURRENT LOCATION

CART STATION

ENTRANCE/ EXIT

102
ON/OFF

103
DISH SELECTION

104
PURCHASED ARTICLE LIST

105
SPECIAL SALES INFORMATION

# FIG.5

[CREATING SELECTED MATERIAL LIST]

START

S101

DISPLAY DISH SELECTION SCREEN

S102

IS OPERATION FOR SELECTING DISH MADE ? — NO

YES

S103

ACQUIRE RECIPE FOR SELECTED DISH AND EXTRACT CANDIDATE MATERIALS

S104

ACQUIRE STOCK INFORMATION ON INGREDIENTS AT HOME

S105

DISPLAY CANDIDATE MATERIAL LIST AND STOCKS OF CANDIDATE MATERIALS AT HOME, AND DISPLAY TO-BE-PURCHASED MATERIAL SELECTION SCREEN URGING USER TO SELECT

S106

ADD SELECTED MATERIAL IN ACCORDANCE WITH SELECTIVE OPERATION MADE BY USER

S107

IS OPERATION FOR FINISHING SELECTION MADE ? — NO

YES

S108

CREATE SELECTED MATERIAL LIST

END

# FIG.6

110

| DISH NAME: PORK CURRY [FOR 4 SERVINGS] | | | | 111 |

112a   112b   112c   112d

| CANDIDATE MATERIAL | REQUIRED AMOUNT | STOCK AT HOME | SELECTION |
|---|---|---|---|
| CURRY ROUX | SERVINGS | SERVINGS | × |
| PORK | 300g | 0g | ○ |
| POTATO | POTATOES (POTATO) | POTATO | ○ |
| CARROT | MEDIUM CARROT (CARROTS) | MEDIUM CARROTS | × |
| ONION | ONIONS | ONIONS | ○ |
| GARLIC | CLOVES | CLOVES | × |
| GINGER | 5g | 0g | × |
| BUTTER | 5g | 0g | ○ |
| : | : | : | : |

112

SELECTION DETERMINATION   113

# FIG.7

| No. | SELECTED MATERIAL |
|-----|-------------------|
| 1 | PORK |
| 2 | POTATO |
| 3 | ONION |
| 4 | BUTTER |

120

# FIG.8

[RETRIEVING SHOPPING ROUTE]

START

S201

EXTRACT DISPLAY PLACES OF
SELECTED MATERIALS BY REFERRING TO
FLOOR LAYOUT OF STORE AND
SELECTED MATERIAL LIST

S202

RETRIEVE ROUTES THAT PASS EXTRACTED
DISPLAY PLACES AND DETERMINE
OPTIMAL ROUTE AS SHOPPING ROUTE

END

# FIG.9

| No. | SELECTED MATERIAL | DISPLAY LOCATION |
|-----|-------------------|------------------|
| 1 | PORK | (xa,ya) |
| 2 | POTATO | (xb,yb) |
| 3 | ONION | (xc,yc) |
| 4 | BUTTER | (xd,yd) |

# FIG.10

[GUIDING ALONG SHOPPING ROUTE]

START

S301

START GUIDING TO FIRST DISPLAY LOCATION

S302

DETERMINE SAMPLING TIME PERIOD Ts
ACCORDING TO MOTION OF USER

S303

HAS Ts PASSED ? — NO

YES

S304

ACQUIRE ACCOMPANYING CONDITIONS

S305

RECOGNIZE MOVING DIRECTION AND MOVING SPEED OF USER

S306

CALCULATE PREDICTED LOCATION OF
USER DURING PASSAGE OF NEXT Ts

S307

CALCULATE TARGET LOCATION OF ACCOMPANYING
THAT IS APART FROM PREDICTED LOCATION BY
SPECIFIED DISTANCE IN SPECIFIED DIRECTION

S308

TRAVEL TOWARD TARGET LOCATION OF
ACCOMPANYING WHILE AVOIDING OBSTACLE

S309

NO — IS DISPLAY LOCATION OF SELECTED MATERIAL REACHED ?

YES

S320

START GUIDING TO
NEXT DISPLAY LOCATION

S310

STOP TRAVELING

S311

IS SELECTED MATERIAL CONTAINED ? — NO

YES

S312

IDENTIFY CONTAINED PRODUCT, DISPLAY PRICE,
AND ADD PRICE TO PURCHASED ARTICLE LIST

S313

YES — IS THERE ANY DISPLAY LOCATION TO HEAD FOR NEXT ?

NO S314

END

# FIG.11

# FIG.12

Pc12

1

L1

Pu12(x2,y2)

U

Dr1

Pc11

1

Pu11(x1,y1), V1, Dr1

U

y

P0(x0,y0)

x

# FIG.13

160

PURCHASED ARTICLE LIST: PORK CURRY [FOR 4 SERVINGS] —161

| No. | MATERIAL NAME 162a | REQUIRED AMOUNT 162b | PURCHASED AMOUNT 162c | PURCHASE PRICE 162d |
|---|---|---|---|---|
| 1 | PORK | 300g | 300g | ¥300 |
| 2 | POTATO | POTATOES | POTATOES | ¥200 |
| 3 | ONION | ONIONS | ONIONS | ¥120 |
| 4 | BUTTER | 5g | 1 PACKET | ¥500 |
| ⋮ | ⋮ | ⋮ | ⋮ | ⋮ |
| SUM OF PURCHASE PRICES | | | ¥1,500 | |

162

162e

CARD SETTLEMENT —163

# FIG.14

# FIG.15

[CHANGING ACCOMPANYING CONDITIONS]

# FIG.16

START

**S330**
IS REQUEST TO CHANGE
ACCOMPANYING
CONDITIONS MADE ?
NO

YES

**S331**
SWITCH FROM MODE IN WHICH
CHANGE CANNOT BE ACCEPTED
TO MODE IN WHICH CHANGE
CAN BE ACCEPTED

**S332**
IS GESTURE OF
USER DETECTED ?
YES

NO

**S340**
IS GESTURE OF
"SWING" RECOGNIZED ?
YES

NO

**S342**
CHANGE SPECIFIED DIRECTION
IN ACCORDANCE WITH
DIRECTION OF SWING

**S341**
IS GESTURE OF
"INDICATION OF NUMBER WITH
FINGERS" RECOGNIZED ?
YES

NO

**S343**
CHANGE SPECIFIED DISTANCE
IN ACCORDANCE WITH
NUMBER OF FINGERS

**S333**
IS CHANGE IN LINE OF
SIGHT OF USER DETECTED ?
YES

NO

**S350**
CHANGE SPECIFIED DIRECTION
IN ACCORDANCE WITH
DIRECTION OF LINE OF SIGHT

**S334**
IS VOICE OF
USER DETECTED ?
YES

NO

**S360**
IS INSTRUCTION THROUGH
VOICE TO CHANGE SPECIFIED
DIRECTION OR SPECIFIED
DISTANCE RECOGNIZED ?
YES

NO

**S361**
CHANGE ACCOMPANYING
CONDITION IN ACCORDANCE
WITH RESULT OF RECOGNITION

# FIG.17

# FIG.18

| SPECIFIED DISTANCE : W1 | SPECIFIED DISTANCE : W2 | SPECIFIED DISTANCE : W3 | SPECIFIED DISTANCE : W4 | SPECIFIED DISTANCE : W5 |

# FIG.19

[REQUESTING SETTLEMENT BY CREDIT CARD]

```
          ┌─────────────┐
          │    START    │
          └─────────────┘
                 │
                 ▼◄──────────────────┐
                              S401    │
          ╱─────────────────────╲ NO │
         ╱   IS OPERATION FOR     ╲──┘
         ╲ INSTRUCTING CARD        ╱
          ╲ SETTLEMENT MADE ?     ╱
           ╲─────────────────────╱
                 │ YES
                              S402
          ┌─────────────────────┐
          │   DISPLAY SCREEN     │
          │ URGING CREDIT CARD   │
          │    TO BE READ        │
          └─────────────────────┘
                 │
                 ▼◄──────────────────┐
                              S403    │
          ╱─────────────────────╲ NO │
         ╱  IS CREDIT CARD READ ? ╲──┘
          ╲─────────────────────╱
                 │ YES
                              S404
          ┌─────────────────────┐
          │ ACQUIRE CREDIT CARD  │
          │      NUMBER          │
          └─────────────────────┘
                 │
                              S405
          ┌─────────────────────┐
          │ ACQUIRE SUM OF       │
          │ PURCHASE PRICES BY   │
          │ REFERRING TO         │
          │ PURCHASED ARTICLE    │
          │ LIST                 │
          └─────────────────────┘
                 │
                              S406
          ┌─────────────────────┐
          │ REQUEST CARD         │
          │ SETTLEMENT BY        │
          │ TRANSMITTING         │
          │ INFORMATION          │
          │ INCLUDING CREDIT     │
          │ CARD NUMBER AND SUM  │
          │ OF PURCHASE PRICES   │
          └─────────────────────┘
                 │
                 ▼
          ┌─────────────┐
          │     END     │
          └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10180683 B2
- US 8634981 B1

- JP 2006155039 A